# EUROPEAN PATENT APPLICATION

(11) **EP 4 679 648 A1**
(43) Date of publication of application: **14.01.2026**
(21) Application number: 25185036.8
(22) Date of filing: 24.06.2025
(51) Int. Cl.: H02G 1/10, F16L 1/12, H02G 9/02, H02G 9/06

(54) **PROTECTIVE SLEEVE SYSTEMS AND METHODS OF ASSEMBLING**

(30) Priority: 08.07.2024 US 202463668554 P; 29.10.2024 US 202418930327
(71) Applicant: Panduit Corp., Tinley Park, Illinois 60487 (US)
(72) Inventor: Keller, Brian D., Tinley Park (US)
(74) Representative: Roberts, Gwilym Vaughan

(57) **Abstract**

A protective sleeving system for use in, for example, offshore subsea applications is provided. The protective sleeving system includes a top half sleeve and a bottom half sleeve for mating together to protect an underwater feature, where the top half sleeve and the bottom half sleeves include lobes that come together to form a cleat when the top half sleeve and the bottom half sleeve are mated together, where a locking member is used to clamp the cleat to secure the top half sleeve and the bottom half sleeve together.

## Description

### Cross-Reference to Related Application(s)

This application claims benefit to U.S. Provisional Patent Application No. 63/668,554, filed July 8, 2024.

### Field of Technology

This disclosure relates to protective sleeve systems and methods of assembling such systems, where the protective sleeve systems are designed to protect cables, pipes, or other features in offshore subsea applications.

### Background

Offshore energy production has been around for decades and until recently was typically directed to oil and gas production. However, more recently renewable energy sources are becoming more common and offshore installations are becoming popular in areas where available land may be too expensive or not available. Regardless of the type of offshore installation, power and/or data transmission may be used in such offshore installations, which then require cables for the transmission of the power and/or data.

The cables used for offshore installations should be protected from abrasion, sharp objects, kinks, and other impediments that can be found in the harsh subsea environment. While the weather conditions are favorable, crews must lay the cables quickly before unfavorable weather sets in to control costs. The cable laying speed is normally dictated by the time to install the protective sleeves and banding.

### Summary

A protective sleeve system is disclosed. The protective sleeve system comprising a top half sleeve including a top lobe, a bottom half sleeve including a bottom lobe, wherein the top lobe and the bottom lobe form a cleat when the top half sleeve and the bottom half sleeve are mated together, and a locking member configured to clamp over the cleat formed by the top lobe and the bottom lobe.

According to an embodiment, a protective sleeve system is disclosed. The protective sleeve system comprising a top half sleeve including a top side protruding mating feature (top side PMF) on first side and a top side receptive mating feature (top side RMF) on a second side, wherein the first side is opposite the second side; a bottom half sleeve including a bottom side receptive mating feature (bottom side RMF) on a first side and a bottom side protruding mating feature (bottom side PMF) on a second side, wherein the first side is opposite the second side, wherein the bottom side RMF is configured to receive the top side PMF and form a first lock housing when the top half sleeve and the bottom half sleeve are mated together, and wherein the top side RMF is configured to receive the bottom side PMF and form a second lock housing when the top half sleeve and the bottom half sleeve are mated together; a first locking member configured to fit into the first lock housing; and a second locking member configured to fit into the second lock housing.

According to an embodiment, a protective sleeve system is disclosed. The protective sleeve system comprising a top half sleeve including a top first lobe; a bottom half sleeve including a bottom first lobe, wherein the top first lobe and the bottom first lobe form a first cleat when the top half sleeve and the bottom half sleeve are mated together; and a first locking member configured to clamp over the first cleat formed by the top first lobe and the bottom first lobe.

To provide a more efficient cable protection system, a protective sleeving system that dramatically increases the speed of installing the protective sleeves is disclosed.

### Brief Description of the Drawings

FIG. 1A is a perspective exploded view showing a top half sleeve and a bottom half sleeve of a protective cable sleeve system, according to an exemplary embodiment.
FIG. 1B is a perspective view of the protective cable sleeve system shown in FIG. 1A in a semi-assembled state, according to an exemplary embodiment.
FIG. 2A is a side view showing a top half sleeve and a bottom half sleeve of a protective cable sleeve system, according to an exemplary embodiment.
FIG. 2B is a cross-sectional view of the protective cable sleeve system shown in FIG. 1B taken along the line 2B-2B, according to an exemplary embodiment.
FIG. 3A is a perspective view of the protective cable sleeve system shown in FIG. 1B where a locking member is being inserted into lock holder cavity to accomplish an assembled state, according to an exemplary embodiment.
FIG. 3B is a cross-sectional view of the protective cable sleeve system shown in FIG. 3A taken along the line 3B-3B after the locking member has been installed into the lock holder cavity, according to an exemplary embodiment.
FIG. 4A is a perspective exploded view showing a top half sleeve and a bottom half sleeve of a protective cable sleeve system, according to an exemplary alternative embodiment.
FIG. 4B is a perspective view of the protective cable sleeve system shown in FIG. 4A in a semi-assembled state, according to an exemplary embodiment.
FIG. 5A is a perspective view of the protective cable sleeve system shown in FIG. 4B further showing a retaining member being installed to accomplish an assembled state, according to an exemplary embodiment.
FIG. 5B is a perspective view of the protective cable sleeve system shown in FIG. 5A in an assembled state, according to an exemplary embodiment.

### Detailed Description

This disclosure describes embodiments of a protective cable sleeve system configured to surround and protect components installed in, for example, offshore subsea applications. The protective cable sleeve system is designed to enable faster and secure assembly, as will be described in more detail below. The protective cable sleeve system form a protected inner channel that may be used to cover and protect components such as cables, pipes, or other components that are routed subsea.

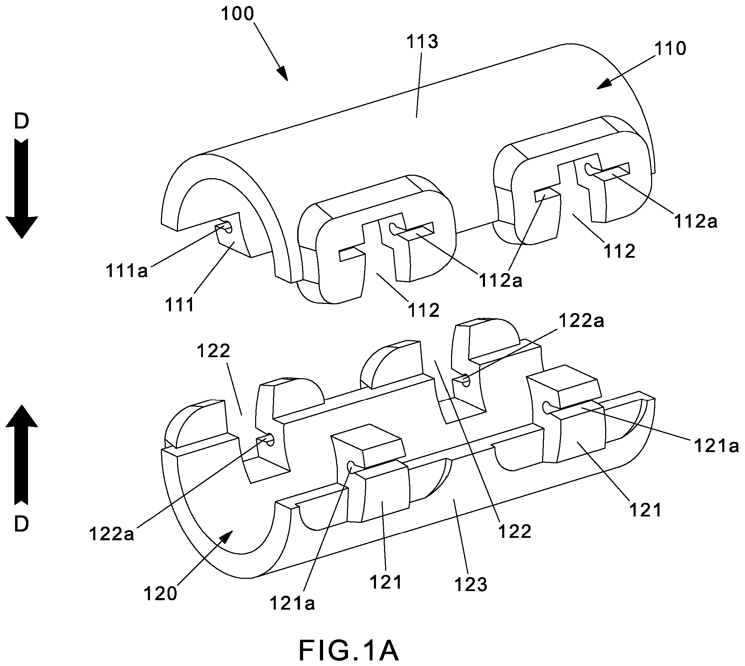

FIG. 1A shows a perspective view of a protective cable sleeve system 100 in a disassembled state where a top sleeve half 110 and a bottom sleeve half 120 have not yet been mated together. The top sleeve half 110 includes a housing body 113 generally in a half cylindrical shape. The top sleeve half 110 also includes receiving portions 112 on one side of the housing body 113, and protruding portions 111 on a second opposite side of the housing body 113. Similarly, the bottom sleeve half 120 includes a housing body 123 generally in a half cylindrical shape. The bottom sleeve half 120 also includes receiving portions 122 on one side of the housing body 123, and protruding portions 121 on a second opposite side of the housing body 123.

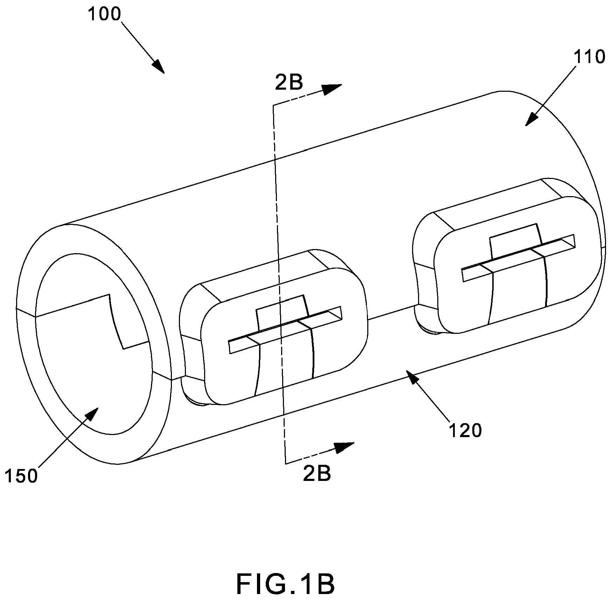

The top sleeve half 110 and the bottom sleeve half 120 are configured to mate together so that protruding portions 111 from the top sleeve half 110 are configured to fit into, and be received by, the receiving portions 122 of the bottom sleeve half 120. And conversely, the protruding portions 121 from the bottom sleeve half 120 are configured to fit into, and be received by, the receiving portions 112 from the top sleeve half 110. The mating direction for mating the top sleeve half 110 with the bottom sleeve half 120 is shown by direction D in FIG. 1A, where the top sleeve half 110 and the bottom sleeve half 120 are shown mated together in a semi-assembled state in FIG. 1B. When the top sleeve half 110 and the bottom sleeve half 120 are mated together as shown in FIG. 1B, they form an inner cavity 150 for holding a cable, pipe, or other feature for subsea protection.

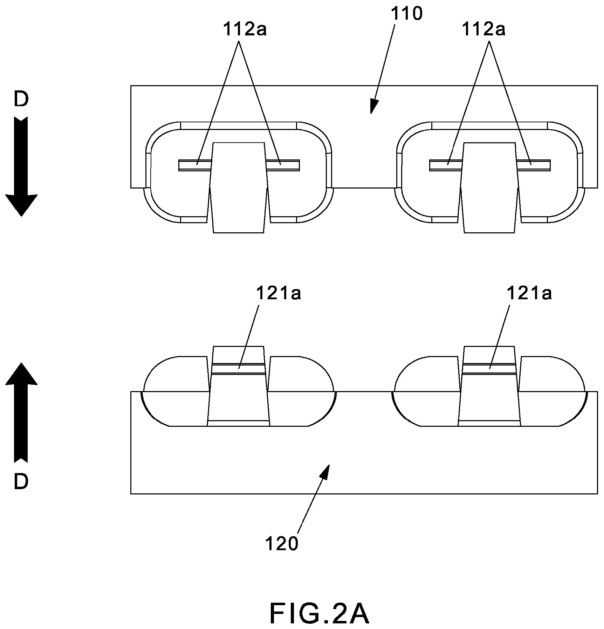

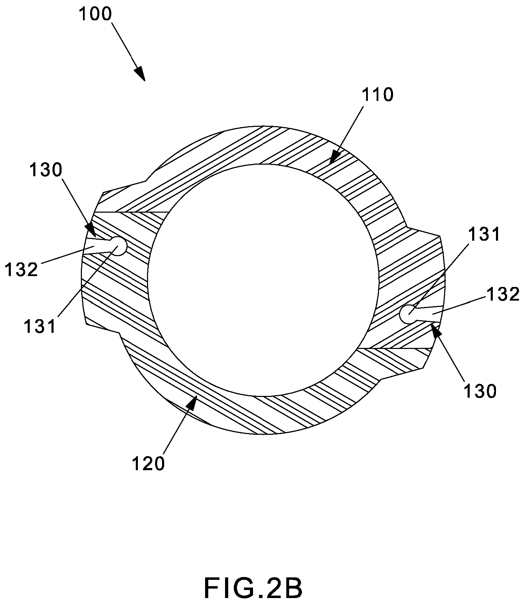

FIG. 2A shows a side view of the top sleeve half 110 and the bottom sleeve half 120 prior to being mated together. The top sleeve half 110 is shown including a top slot 112a, and the bottom sleeve half 120 is shown including a bottom slot 121a. The top slot 112a and the bottom slot 121a form the entrance to a locking channel 132 as will be described with reference to FIG. 2B.

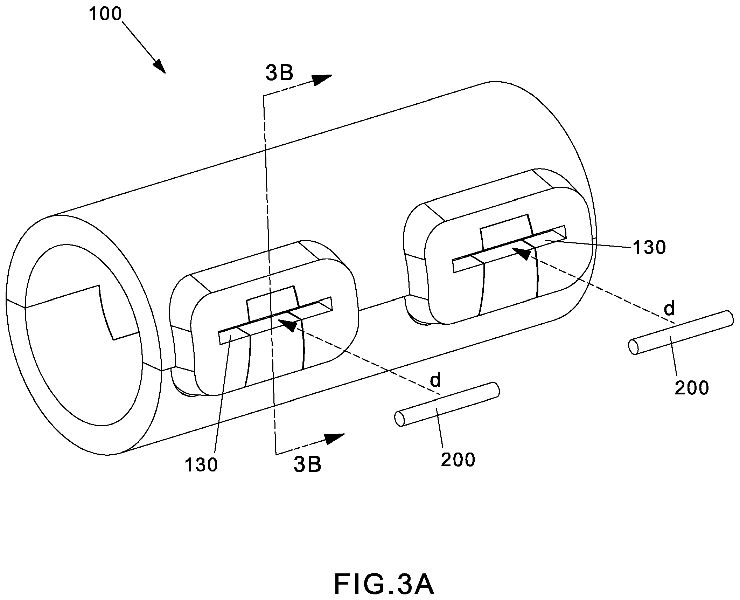

FIG. 2B shows a cross-sectional view of the protective cable sleeve system 100 taken along the line 2B-2B from FIG. 1B, where the protective cable sleeve system 100 is in the semi-assembled state. When the protective cable sleeve system 100 is in the semi-assembled state, a lock holder cavity 130 is formed for installing a locking member 200 (see FIG. 3A) into. The lock holder cavity 130 is formed by portions from the top slot 112a and the bottom slot 121a when they come together in the semi-assembled state as shown in FIG. 1B. The lock holder cavity 130 includes a locking channel 132, and also includes a cylindrical housing 131 (i.e., a lock housing) at a distal end of the locking channel 132.

FIG. 3A shows the protective cable sleeve system 100 where the top sleeve half 110 and the bottom sleeve half 120 have been mated together to form the lock holder cavity 130 for receiving the locking member 200. The locking member 200 may be made in a cylindrical shape. When the locking member 200 is installed into the lock holder cavity 130 by pressing the locking member 200 through the locking channel 132 along the direction d, the locking member 200 ends up resting inside the cylindrical housing 131 portion of the lock holder cavity 130 to securely lock the top sleeve half 110 and the bottom sleeve half 120 together in the mated assembled state.

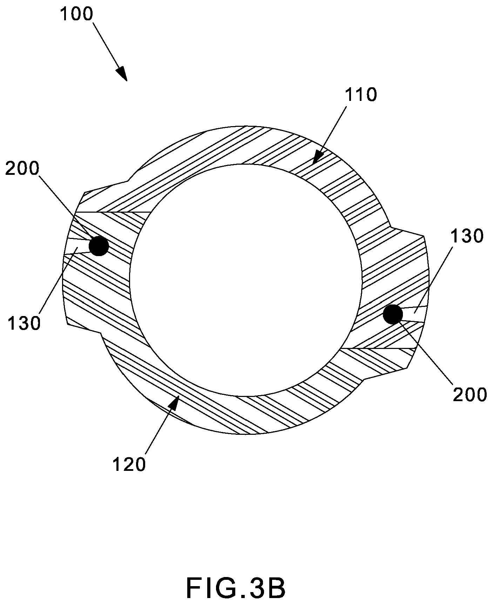

FIG. 3B is a cross-sectional view of the protective cable sleeve system 100 taken along the line 3B-3B from FIG. 3A, where the locking member 200 is shown fully installed into the cylindrical housing 131 of the lock holder cavity 130. When the locking member 200 is pressed into the cylindrical housing 131 of the lock holder cavity 130, the locking channel 132 is reformed to cover the entrance to the cylindrical housing 131, which keeps the locking member 200 securely locked inside the cylindrical housing 131 and provides the locking of the top sleeve half 110 and the bottom sleeve half 120 together in the mated assembled state.

The top sleeve half 110 and the bottom sleeve half 120 may be made from an elastic polymer material, such as polyurethane. Then since the locking channel 132 is formed from portions of the body from the top sleeve half 110 and the bottom sleeve half, the locking channel 132 itself has a flexible property to deform to make room for the locking member 200 to be pushed through the locking channel 132. Then as described, after the locking member 200 is installed into the cylindrical housing 131, the shape of the locking channel 132 is reinstated to help keep the locking member 200 inside the cylindrical housing 131, thus providing a locking effect. By installing the locking member 200 inside the cylindrical housing 131, the top sleeve half 110 and the bottom sleeve half 120 are locked and mated together.

Although the top slot 112a and the bottom slot 121a are shown to come together to form the cylindrical housing 131 in a cylindrical shape for receiving the locking member 200 that is also in the cylindrical shape, the top slot 112a and the bottom slot 121a may be made into other shapes to receive the locking member 200 of a corresponding shape, according to other alternative embodiments, such as a cross-section having a triangular, square, octagonal, rectangular, oval, or other shapes.

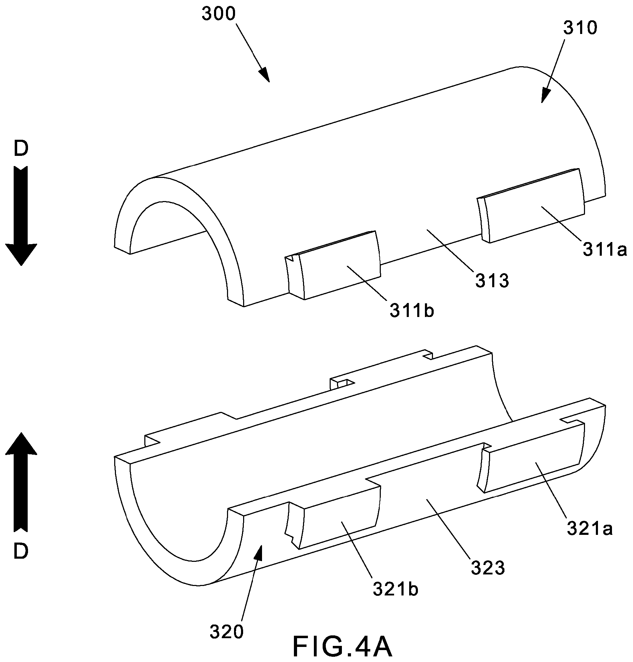

FIG. 4A shows a perspective view of a protective cable sleeve system 300 according to an alternative embodiment. The protective cable sleeve system 300 shown in FIG. 4A is in a disassembled state where a top sleeve half 310 and a bottom sleeve half 320 have not yet been mated together. The top sleeve half 310 includes a housing body 313 generally in a half cylindrical shape. The top sleeve half 310 also includes a first type lobe 311a near a first end of the housing body 313, and a second type lobe 311b near an opposite second end of the housing body.

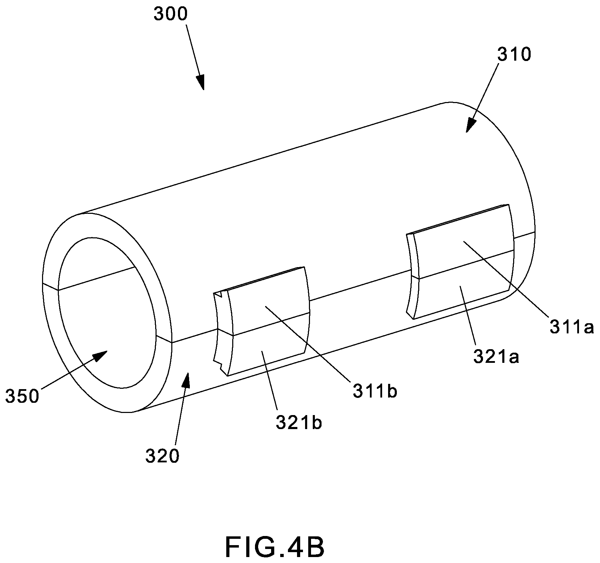

Similarly, the bottom sleeve half 320 includes a housing body 323 generally in a half cylindrical shape. The bottom sleeve half 320 includes a first type lobe 321a near a first end of the housing body 313, and a second type lobe 321b near an opposite second end of the housing body. The first type lobes 311a, 321a are configured to be shaped as mirrors of each other, and the second type lobes 311b, 321b are configured to be shaped as mirrors of each other when the top sleeve half 310 and the bottom sleeve half 320 are mated to each other, as shown in FIG. 4B.

The first type lobes 311a, 321a, when mated together, are configured to have an overhang on all four sides (e.g., top, bottom, left, right). The second type lobes 311b, 321b, when mated together, are configured to have an overhang on only two sides (e.g., top and bottom, or left and right). Although the protective cable sleeve system 300 is shown to have both first type lobes 311a, 321a and second type lobes 311b, 321b, according to other alternative embodiments the protective cable sleeve system 300 may have only one or more first type lobes 311a, 321a or only one or more second type lobes 311b, 321b, depending on a length of the protective cable sleeve system 300. Similarly, although the protective cable sleeve system 300 is shown to have a single first type lobes 311a, 321a and a single second type lobes 311b, 321b, according to other alternative embodiments the protective cable sleeve system 300 may include one or more first type lobes 311a, 321a and one or more second type lobes 311b, 321b, depending on a length of the protective cable sleeve system 300.

The mating direction for mating the top sleeve half 310 with the bottom sleeve half 320 is shown by direction D in FIG. 4A, where the top sleeve half 310 and the bottom sleeve half 320 are shown mated together in a semi-assembled state in FIG. 4B. When the top sleeve half 310 and the bottom sleeve half 320 are mated together, they form an inner cavity 350 configured to hold a cable, pipe, or other feature for protection by the protective cable sleeve system 300.

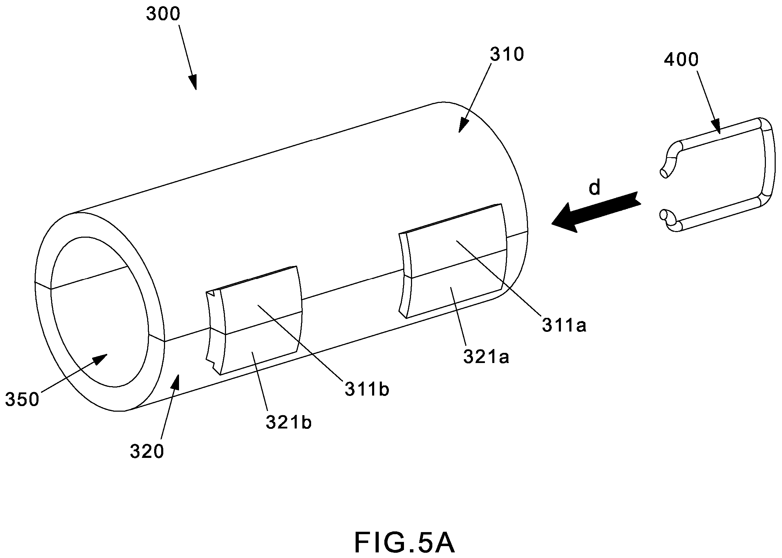

FIG. 5A shows the protective cable sleeve system 300 where the top sleeve half 310 and the bottom sleeve half 320 have been mated together so that the first type lobes 311a, 321a and the second type lobes 311b, 321b from the top sleeve half 310 and the bottom sleeve half 320 are lined up to overlap and be in condition for receiving a locking member 400. The mated first type lobes 311a, 321a and the mated second type lobes 311b, 321b each therefore form a type of cleat configuration, where the locking member 400 may be used to lock down the two mated first type lobes 311a, 321a and another locking member 400 may be used to lock down the two mated second tyle lobes 311b, 321b, similar to other known cleat designs.

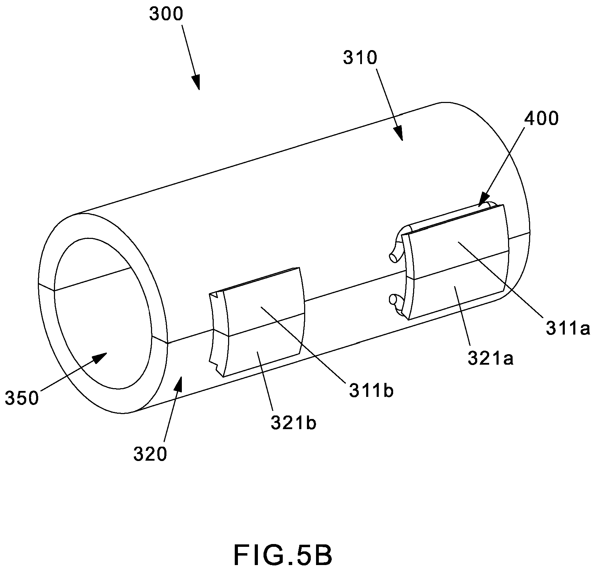

The locking member 400 is shown to be in a spring wire, "C" type, shape for sliding over the mated first type lobes 311a, 321a and the mated second type lobes 311b, 321b in the direction d, as shown in FIG. 5A. When the locking member 400 is retained over the mated first type lobes 311a, 321a and the mated second type lobes 311b, 321b, the top sleeve half 310 and the bottom sleeve half 320 may be securely locked together in the mated state as shown in FIG. 5B.

The top sleeve half 310 and the bottom sleeve half 320 may be made from an elastic polymer material, such as polyurethane to give the lobes 311a, 311b, 321a, 321b some elasticity when sliding on the locking member 400. The elastic material also enables the shape of the lobes 311a, 311b, 321a, 321b to take on other shapes such as triangular, square, octagonal, rectangular, oval, or other shapes. The locking member 400 may be made from a more rigid material, such as metal (e.g., titanium, stainless steel, or other corrosion resistant metal), to ensure the locking member 400 can securely hold the mated first type lobes 311a, 321a and the mated second type lobes 311b, 321b together. The locking member 400 may be a spring wire, as shown in FIG. 5A, or other material design such as a strap, sheet metal stamping with latches, or other retaining design.

Furthermore, while the particular embodiments described herein have been shown and described, it will be obvious to those skilled in the art that changes and modifications may be made without departing from the teachings of the protective cable sleeve system described herein. The matter set forth in the foregoing description and accompanying drawings is offered by way of illustration only and not as limitation. The scope of the different embodiments described herein are intended to be defined in the following claims when viewed in their proper perspective.

## Claims

1. A protective sleeve system comprising:
a top half sleeve including a top side protruding mating feature (top side PMF) on a first side and a top side receptive mating feature (top side RMF) on a second side, wherein the first side is opposite the second side;
a bottom half sleeve including a bottom side receptive mating feature (bottom side RMF) on a first side and a bottom side protruding mating feature (bottom side PMF) on a second side, wherein the first side is opposite the second side, wherein the bottom side RMF is configured to receive the top side PMF and form a first lock housing when the top half sleeve and the bottom half sleeve are mated together, and wherein the top side RMF is configured to receive the bottom side PMF and form a second lock housing when the top half sleeve and the bottom half sleeve are mated together;
a first locking member configured to fit into the first lock housing; and
a second locking member configured to fit into the second lock housing.

2. The protective sleeve system of claim 1, wherein the first locking member is configured in a cylindrical shape.

3. The protective sleeve system of claim 1, wherein the first locking member is configured to have a cross-section in a triangular shape.

4. The protective sleeve system of claim 1, wherein the first locking member is configured to have a cross-section in a rectangular shape.

5. The protective sleeve system of any preceding claim, wherein the top half sleeve and the bottom half sleeve are made from a polyurethane material.

6. The protective sleeve system of any preceding claim,
the top half sleeve further comprising:
a second top side PMF on the first side; and
a second top side RMF on the second side;
the bottom half sleeve further comprising:
a second bottom side RMF on the first side; and
a second bottom side PMF on the second side, wherein the second bottom side RMF is configured to receive the second top side PMF and form a third lock housing when the top half sleeve and the bottom half sleeve are mated together, and wherein the second top side RMF is configured to receive the second bottom side PMF and form a fourth lock housing when the top half sleeve and the bottom half sleeve are mated together.

7. The protective sleeve system of claim 6, further comprising:
a third locking member configured to fit into the third lock housing; and
a fourth locking member configured to fit into the fourth lock housing.

8. The protective sleeve system of claim 7, wherein the third locking member is configured in a cylindrical shape.

9. The protective sleeve system of claim 7, wherein the third locking member is configured to have a cross-section in a triangular shape.

10. The protective sleeve system of claim 7, wherein the third locking member is configured to have a cross-section in a rectangular shape.

11. Use of the protective sleeve system of any preceding claim.

12. Use of the protective sleeve system of any of claims 1 to 10 for protecting cables, pipes or components of offshore subsea installations.

13. A method comprising:
providing a top half sleeve including a top side protruding mating feature (top side PMF) on a first side and a top side receptive mating feature (top side RMF) on a second side, wherein the first side is opposite the second side;
providing a bottom half sleeve including a bottom side receptive mating feature (bottom side RMF) on a first side and a bottom side protruding mating feature (bottom side PMF) on a second side, wherein the first side is opposite the second side, wherein the bottom side RMF is configured to receive the top side PMF and wherein the top side RMF is configured to receive the bottom side PMF;
forming a first lock housing by mating together the top half sleeve and the bottom half sleeve using the bottom side RMF and the top side PMF;
forming a second lock housing by mating together the top half sleeve and the bottom half sleeve using the top side RMF and the bottom side RMF;
providing a first locking member configured to fit into the first lock housing and a second locking member configured to fit into the second lock housing; and
fitting the first locking member into the first lock housing and the second locking member into the second lock housing.

14. The method of claim 13, wherein:
the top half sleeve further comprises:
a second top side PMF on the first side, and
a second top side RMF on the second side; and
the bottom half sleeve further comprises:
a second bottom side RMF on the first side, and
a second bottom side PMF on the second side, wherein the second bottom side RMF is configured to receive the second top side PMF, and wherein the second top side RMF is configured to receive the second bottom side PMF,
the method further comprising:
forming a third lock housing by mating together the top half sleeve and the bottom half sleeve using the second bottom side RMF and the second top side PMF; and
forming a fourth lock housing when the top half sleeve and the bottom half sleeve are mated together using the second top side RMF and the second bottom side PMF.

15. The method of claim 14, further comprising:
providing a third locking member configured to fit into the third lock housing and a fourth locking member configured to fit into the fourth lock housing; and
fitting the third locking member into the third lock housing and the fourth locking member into the fourth lock housing.
